(19) Europäisches Patentamt
European Patent Office
Office européen des brevets

(11) **EP 2 730 799 B1**

(12) **EUROPÄISCHE PATENTSCHRIFT**

(45) Veröffentlichungstag und Bekanntmachung des Hinweises auf die Patenterteilung:
**17.04.2019   Patentblatt 2019/16**

(51) Int Cl.:
**E04B 1/98** *(2006.01)*     **F03D 80/00** *(2016.01)*
**F16F 7/10** *(2006.01)*

(21) Anmeldenummer: **12007685.6**

(22) Anmeldetag: **13.11.2012**

(54) **SCHWINGUNGSTILGERANORDNUNG ZUR VERMINDERUNG VON SCHWINGUNGEN**

VIBRATION ABSORBER ASSEMBLY FOR REDUCING OSCILLATIONS

AGENCEMENT DE RÉDUCTION DE VIBRATIONS POUR LA RÉDUCTION DES VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.05.2014   Patentblatt 2014/20**

(73) Patentinhaber: **Wölfel Beratende Ingenieure GmbH & Co. KG**
**97204 Höchberg (DE)**

(72) Erfinder:
• **Katz, Sebastian**
**97082 Würzburg (DE)**
• **Engelhardt, Jürgen**
**97249 Eisingen (DE)**
• **Pankoke, Steffen**
**97837 Erlenbach (DE)**

(74) Vertreter: **Keil & Schaafhausen Patent- und Rechtsanwälte PartGmbB**
**Friedrichstraße 2-6**
**60323 Frankfurt am Main (DE)**

(56) Entgegenhaltungen:
**JP-A- 7 324 518**

**Beschreibung**

Die Erfindung betrifft eine Schwingungstilgeranordnung nach dem Oberbegriff des Anspruchs 1.

Eine derartige Schwingungstilgeranordnung ist aus JP 07-324518 A bekannt.

Die Erfindung wird im Folgenden anhand eines Turms für eine Windenergieanlage beschrieben. Sie ist aber auch bei anderen hohen und schlanken Bauwerken anwendbar, z.B. bei Schornsteinen, Antennen, Hochhäusern, Türmen oder Offshore-Bauwerken, wie Transformator-Stationen. Unter einem "hohen, schlanken Bauwerk" soll ein Bauwerk verstanden werden, das ein Verhältnis zwischen Höhe und kleinster Breite von mindestens fünf aufweist.

Hohe und schlanke Bauwerke, insbesondere Windenergieanlagen und hier besonders Offshore-Windenergieanlagen mit hohen Stahltürmen erfordern Maßnahmen zur Erhöhung der Dämpfung der ersten Eigenform quer zur Windrichtung. Schwingungen in Windrichtung sind aufgrund hoher aerodynamischer Dämpfung während des Betriebs vielfach nicht so kritisch.

Die Türme von Windenergieanlagen haben in der Regel relativ niedrige Eigenfrequenzen. Man hat daher in WO 2009/068599 A2 vorgeschlagen, ein Pendel für die Schwingungstilgeranordnung zu verwenden. Aufgrund der relativ niedrigen Eigenfrequenzen erfordert ein derartiges Pendel aber eine relativ große Länge. Ein Pendel mit großer Länge hat bauraumtechnische Nachteile, weil ein entsprechend großer Bauraum für die Schwingungsbewegung des Pendels bereitgestellt werden muss.

Der Erfindung liegt die Aufgabe zugrunde, eine Schwingungstilgeranordnung mit möglichst geringem Bauraumbedarf bereitzustellen.

Diese Aufgabe wird durch die kennzeichnenden Merkmale des Anspruchs 1 gelöst.

Bei einer derartigen Ausgestaltung kann man die Reibung klein halten, die sich bei einer Bewegung des Pendels mit seiner Tilgermasse gegenüber der Fläche ergibt. Diese Reibung kann zwar ausgenutzt werden, um der Schwingungsbewegung des Pendels und damit der Schwingung des hohen schlanken Bauwerks Energie zu entziehen, sie lässt sich aber vielfach nicht genau genug einstellen, um mit relativ kleinen Komponenten die gewünschte Schwingungsverminderung zu erzielen.

Vorzugsweise ist die Rollenanordnung an der Tilgermasse angeordnet. Die Tilgermasse weist in der Regel den größten Masseanteil der Anordnung aus Pendel und Tilgermasse auf. Zwar wird auch das Pendel, das vorzugsweise als Pendelstab ausgebildet ist, eine gewisse Masse aufweisen. Der Massenschwerpunkt der Anordnung aus Pendel und Tilgermasse liegt jedoch vorzugsweise innerhalb der Tilgermasse. Wenn die Rollenanordnung an der Tilgermasse angeordnet ist, dann erfolgt die Abstützung im Bereich des Massenschwerpunkts.

Hierbei ist bevorzugt, dass die Rollenanordnung in Schwerkraftrichtung in einem Bereich unterhalb des Massenschwerpunkts der Tilgermasse angeordnet ist. Damit wird der Massenschwerpunkt der Tilgermasse unmittelbar unterstützt. Es ist in der Regel nicht erforderlich, dass die Rollenanordnung genau unter dem Massenschwerpunkt der Tilgermasse angeordnet ist. Dies lässt sich vielfach auch nicht für alle Neigungswinkel der Fläche realisieren. Man kann aber vermeiden, dass größere Kippkräfte auf die Tilgermasse und damit auf das Pendel wirken.

Vorzugsweise weist die Rollenanordnung mindestens ein Rad auf, dessen Rotationsachse parallel zu einer senkrecht zu der Fläche gerichteten Ebene ist, in der das Pendel angeordnet ist. Damit ergibt sich eine optimale Abrollbewegung für das Rad. Das Rad kann auf einer Kreislinie rollen, die durch einen Punkt am Pendel definiert ist, wenn das Pendel schwingt. Reibungsverluste, die durch eine Relativbewegung zwischen dem Rad und der Fläche hervorgerufen werden, können damit minimiert werden, was sich positiv auf die Verschleißeigenschaften auswirkt.

Hierbei ist besonders bevorzugt, dass die Rotationsachse parallel zur Fläche gerichtet ist. Die Fläche verläuft dann tangential zum Umfang des Rades, der dann beispielsweise als Zylindermantelfläche ausgebildet sein kann.

Vorzugsweise ist die Fläche mit einer Stelleinrichtung verbunden, durch die ein Neigungswinkel der Fläche gegenüber der Schwerkraftrichtung veränderbar ist. Damit beinhaltet die Schwingungstilgeranordnung eine semiaktive oder adaptive Komponente, die eine Verstellung der Tilgereigenfrequenz ermöglicht. Je größer der Neigungswinkel der Fläche gegenüber der Schwerkraftrichtung ist, desto niedriger ist die Eigenfrequenz des Pendels. Bei einem rechten Winkel kann eine Eigenfrequenz von Null erreicht werden. Man kann also durch eine Betätigung der Stelleinrichtung die Tilgereigenfrequenz verändern. In der Regel muss die Tilgereigenfrequenz nur langsam verändert werden, so dass an die Dynamik der Stelleinrichtung keine allzu hohen Anforderungen gestellt werden. Eine solche Verstellung kann dann notwendig sein, wenn der Tilger nach Einbau in Betrieb genommen wird, um seine Eigenfrequenz bestmöglich auf die Eigenfrequenz des Bauwerks abzustimmen. Die Verstellung kann aber auch notwendig werden, wenn sich im Laufe der Zeit die Eigenfrequenz des Bauwerks verändert.

Hierbei ist bevorzugt, dass die Fläche um einen Drehpunkt verschwenkbar ist, der in Schwerkraftrichtung unterhalb des Massenschwerpunkts der Tilgermasse angeordnet ist. Die Anordnung des Drehpunkts unter der Tilgermasse hat den Vorteil, dass nur geringe Kräfte der Stelleinrichtung benötigt werden, um den Neigungswinkel der Fläche zu verändern. Da die Tilgermasse so positioniert ist, dass ihr Schwerpunkt möglichst lotrecht oberhalb des Drehpunkts oder Drehgelenks angeordnet ist, ergeben sich auch nur entsprechend kleine Hebelkräfte, die einer Änderung des Neigungswinkels entgegengerichtet sein können. Auch im Betrieb, also bei einer Schwingung des Pendels, ist die Stelleinrichtung keinen großen Kräften ausgesetzt, so dass der Neigungswinkel auch im Betrieb problemlos verstellt werden kann.

Erfindungsgemäß ist die Rollenanordnung mit einer steuerbaren, insbesondere regelbaren Antriebseinrichtung verbunden. Die Antriebseinrichtung erweitert die Schwingungstilgeranordnung zu einem aktiven Tilger. Die Antriebseinrichtung kann dabei durch einen Regelkreis gesteuert werden, der mindestens einen Sensor, in der Regel aber mehrere Sensoren aufweist, bei denen es sich vorzugsweise um Beschleunigungs- oder Schwingungssensoren oder auch um Dehnungssensoren handeln kann, die an dem Bauwerk angeordnet sind. Die über die Sensoren ermittelten Schwingungen des Bauwerks können dann in den Regelkreis eingespeist werden, so dass die Antriebseinrichtung das Pendel mit der Tilgermasse über die Rollenanordnung entsprechend ansteuern kann, so dass sich eine schwingungsmindernde Wirkung ergibt.

Hierbei ist bevorzugt, dass die Antriebseinrichtung als elektrischer Antrieb ausgebildet ist, der sowohl motorisch als auch generatorisch betreibbar ist. Im motorischen Betrieb wirkt der Antrieb als aktive Schwingungstilgerkomponente. Damit ist eine sehr wirksame Schwingungsdämpfung möglich. Allerdings benötigt der Antrieb elektrische Energie. Wenn diese elektrische Energie ausfällt, kann man den Antrieb immer noch generatorisch betreiben. Beim generatorischen Betrieb ist es im Prinzip lediglich erforderlich, die Wicklungen des Antriebs kurz zu schließen oder mit einem elektrischen Widerstand, beispielsweise einem Ohm'schen Widerstand, zu verbinden, so dass die vom generatorisch arbeitenden Antrieb erzeugte elektrische Energie in Wärme umgewandelt wird, um der Schwingung Energie zu entziehen. In diesem Fall wirkt die Schwingungstilgeranordnung wie ein passiver gedämpfter Schwingungstilger. Man kann sagen, dass die passive Schwingungstilgerwirkung eine Art Notbetrieb darstellt, wenn die aktive Schwingungstilgerwirkung, z.B. wegen des Ausfalls der elektrischen Energie oder anderer unerwünschter Ereignisse, nicht verfügbar ist. In einem solchen Fall erfolgt durch die passive Schwingungstilgerwirkung eine Schwingungsminderung des Gebäudes, die zwar geringer ist als bei der aktiven Schwingungstilgerwirkung, jedoch auf jeden Fall zu geringeren Schwingungen führt als bei komplettem Ausfall der gesamten Tilgerwirkung.

Alternativ oder zusätzlich kann vorgesehen sein, dass die Schwingungstilgeranordnung einen Dämpfer, insbesondere einen Wirbelstromdämpfer aufweist. Bei einem Dämpfer wird Bewegungsenergie irreversibel in eine andere Energieform umgesetzt. Diese andere Energieform ist in den meisten Fällen Wärme. Ein Wirbelstromdämpfer verwendet zur Umsetzung der Bewegungsenergie elektrische Ströme, die durch ein Magnetfeld induziert werden, das bei einer Bewegung des Pendels gegenüber einem anderen Element bewegt wird. Diese Wirbelströme erzeugen dann Wärme. Die dadurch der Schwingungsbewegung entzogene Energie führt zur Dämpfung der Schwingung. Der Wirbelstromdämpfer hat den Vorteil, dass seine Dämpfungswirkung eine günstige Abhängigkeit von der Bewegungsgeschwindigkeit des Pendels afweist. Bis zu einer Grenzgeschwindigkeit kann die Dämpfungskraft als linear, d. h. als proportional zur Geschwindigkeit angenommen werden. Die Frequenz der Schwingung ist dafür von untergeordneter Bedeutung.

Hierbei ist bevorzugt, dass die Wirbelstromdämpfer zwei Elemente aufweist, von denen eines als Magnetfelderzeugungseinrichtung und eines als elektrischer Leiter ausgebildet ist, und die beiden Elemente durch eine Bewegung des Pendels relativ zueinander bewegbar sind. Die Magnetfelderzeugungseinrichtung kann beispielsweise Permanentmagnete aufweisen, die keine externe Energieversorgung benötigen. Der elektrische Leiter kann als Platte aus Aluminium, Kupfer, einer Legierung aus diesen beiden Metallen oder einem anderen elektrisch gut leitenden Metall gebildet sein, das zwischen den Permanentmagneten angeordnet ist. Wenn sich die Permanentmagnete und die Platte relativ zueinander bewegen, dann induziert das von den Permanentmagneten erzeugte Magnetfeld Wirbelströme in der Platte. Diese werden dann in Wärme umgesetzt, die von der Platte abgegeben werden kann.

Hierbei ist bevorzugt, dass der Wirbelstromdämpfer zumindest einen Teil der Rollenanordnung umfasst. Die Rollenanordnung übernimmt also neben der Abstützung der Tilgermasse und gegebenenfalls der Funktion des Antriebs der Tilgermasse durch die Antriebseinrichtung eine Dämpfungsfunktion. Da man diese Dämpfungsfunktion mit Hilfe des Wirbelstromdämpfers in die Rollenanordnung zumindest teilweise integrieren kann, benötigt man keinen zusätzlichen Bauraum, so dass der Bauraum der Schwingungstilgeranordnung insgesamt klein gehalten werden kann.

Hierbei ist bevorzugt, dass eines der beiden Elemente durch die Rollenanordnung gegenüber dem anderen der beiden Elemente drehantreibbar ist. Vorzugsweise verbindet man mit der Rollenanordnung oder dem Rad oder den Rädern der Rollenanordnung eine elektrisch leitende Platte, die zwischen Permanentmagneten angeordnet ist, die gemeinsam mit der Tilgermasse bewegt werden. Wenn sich dann das Rad dreht, werden in der rotierenden Platte die Wirbelströme erzeugt.

In einer anderen Ausgestaltung kann vorgesehen sein, dass eines der beiden Elemente an der Tilgermasse oder am Pendel und das andere der beiden Elemente an der Fläche angeordnet ist. In diesem Fall werden die Wirbelströme bei einer Bewegung der Tilgermasse oder des Pendels unmittelbar, d.h. ohne Umsetzung einer Bewegung, induziert.

Vorzugsweise ist die Fläche als ebene Fläche ausgebildet. Damit ergeben sich bei einer Schwingungsbewegung des Pendels keine zusätzlichen Rückstellkräfte, die man bei der Auslegung des Schwingungstilgers berücksichtigen müsste.

Die Erfindung wird im Folgenden anhand eines bevorzugten Ausführungsbeispiels in Verbindung mit der Zeichnung beschrieben. Hierin zeigen:

Fig. 1     eine Seitenansicht einer Schwingungstilgeranordnung,

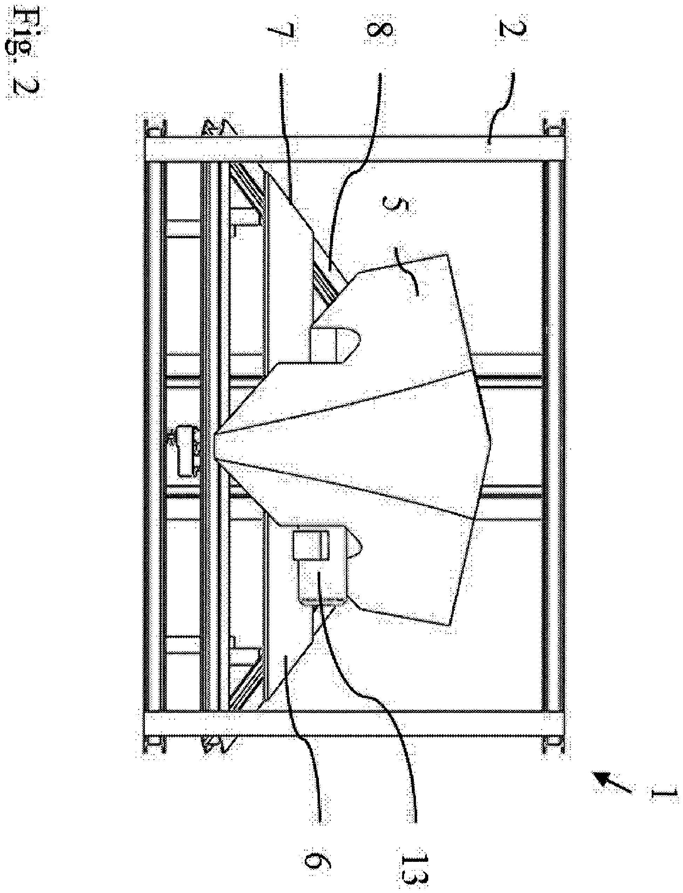

Fig. 2     eine Vorderansicht der Schwingungstilgeranordnung,

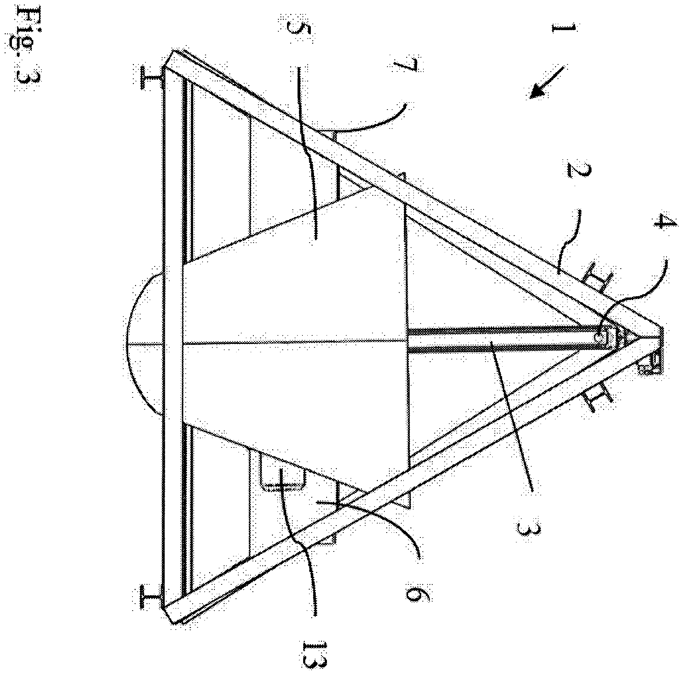

Fig. 3     eine Draufsicht auf die Schwingungstilgeranordnung,

Fig. 4     die Schwingungstilgeranordnung mit einer Einstellung für eine höhere Pendelfrequenz und

Fig. 5     die Schwingungstilgeranordnung mit einer Einstellung für eine niedrigere Pendelfrequenz.

In allen Figuren sind gleiche Elemente mit den gleichen Bezugszeichen versehen.

Die Schwingungstilgeranordnung 1 weist einen Rahmen 2 auf, der in einem Bauwerk befestigt werden kann, dessen Schwingungen gedämpft oder sogar getilgt werden sollen. Bei einem derartigen Bauwerk handelt es sich insbesondere um ein hohes, schlankes Bauwerk, bei dem das Verhältnis zwischen Höhe und kleinster Breite mindestens fünf beträgt. Derartige Bauwerke sind insbesondere Windenergieanlagen, vor allem Offshore-Windenergieanlagen, mit hohen Stahltürmen, aber auch Schornsteine, Antennen, Hochhäuser oder andere Offshore-Bauwerke, wie Transformator-Stationen.

Der Rahmen 2 kann in nicht näher dargestellter Weise um eine vertikale Achse verdrehbar sein, um einer Schwingungsrichtung des Bauwerks folgen zu können.

Die Schwingungstilgeranordnung 1 weist ein Pendel 3 auf, das an einem Pendelgelenk 4 aufgehängt ist und um einen durch das Pendelgelenk 4 gebildeten Drehpunkt pendeln kann. Das Pendel 3 ist als Pendelstab ausgebildet, der eine gewisse Steifigkeit aufweist.

Am in Schwerkraftrichtung unteren Ende des Pendels 3 ist eine Tilgermasse 5 angeordnet. Die Masse der Tilgermasse 5 ist wesentlich größer als die Masse des Pendels 3, so dass man in guter Näherung davon ausgehen kann, dass der Massenschwerpunkt der Anordnung aus Tilgermasse 5 und Pendel 3 innerhalb der Tilgermasse 5 angeordnet ist.

Die Tilgermasse 5 und damit das Pendel 3 sind auf einer Fläche 6 gegen die Schwerkraft abgestützt. Die Fläche 6 ist gegenüber der Schwerkraftrichtung geneigt. Die Fläche 6 ist als Oberfläche einer Platte 7 ausgebildet. Die Platte 7 ist auf einem Gestell 8 angeordnet. Das Gestell 8 ist über ein Drehgelenk 9 mit dem Rahmen 2 verbunden. Das Drehgelenk 9 bildet einen Drehpunkt, um den das Gestell 8 und damit die Fläche 6 verschwenkt werden können. Bei einem derartigen Verschwenken wird der Neigungswinkel der Fläche 6 relativ zur Schwerkraftrichtung geändert.

Um eine derartige Verschwenkung zu bewirken, ist eine Stelleinrichtung 10 vorgesehen. Diese Stelleinrichtung kann beispielsweise als Spindeltrieb ausgebildet sein, der zwischen dem Gestell 8 und dem Rahmen 2 angeordnet ist.

Die Tilgermasse 5 ist über eine Rollenanordnung 11 auf der Fläche 6 abgestützt. Die Rollenanordnung 11 weist ein Rad 12 auf, das auf der Fläche 6 abrollen kann. Es können natürlich auch mehrere Räder vorgesehen sein.

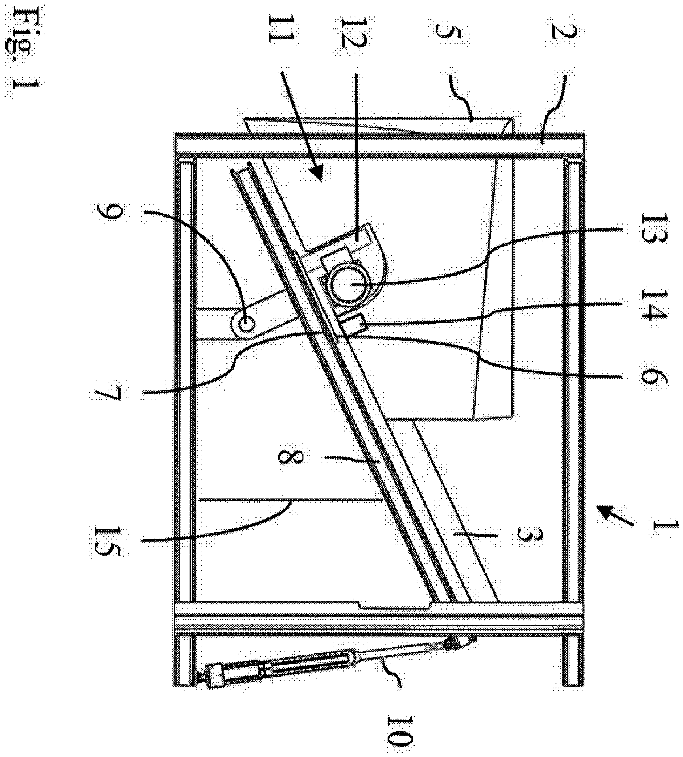

Wie insbesondere in Fig. 1 zu erkennen ist, ist das Rad 12 senkrecht zur Fläche 6 gerichtet, d.h. die Fläche 6 bildet eine Tangente an das Rad 12. Mit anderen Worten ist die Rotationsachse des Rades 12 parallel zur Fläche 6 ausgerichtet.

Um Reibungsverluste möglichst klein zu halten, ist die Rotationsachse des Rades 12 auch parallel zu einer Ebene gerichtet, die auf der Fläche 6 senkrecht steht und in der das Pendel 3, genauer gesagt seine Mittelachse, angeordnet ist. Das Rad 12 kann damit praktisch reibungsfrei über die Fläche 6 bewegt werden, weil es nur abrollen muss.

Die Rollenanordnung 11 unterstützt die Anordnung aus Pendel 3 und Tilgermasse 5 im Bereich des Massenschwerpunkts dieser Anordnung. Da die Neigung der Fläche 6 gegenüber der Schwerkraftrichtung veränderbar ist, wird sich zwar nicht für alle Neigungswinkel der Fläche 6 sicherstellen lassen, dass die Rollenanordnung 11 genau unterhalb des Massenschwerpunkts liegt. Man kann aber in guter Näherung sicherstellen, dass keine größeren Kippkräfte auf die Rollenanordnung 11 wirken.

In ähnlicher Weise ist auch das Drehgelenk 9 in etwa unterhalb des Massenschwerpunkts der Anordnung aus Pendel 3 und Tilgermasse 5 angeordnet, so dass man beim Verstellen des Neigungswinkels der Fläche 6 keine größeren Kräfte aufbringen muss, die durch eine stark ungleichmäßige Massenverteilung bedingt sind.

Die Rollenanordnung ist mit einer steuerbaren Antriebseinrichtung 13 versehen. Die Antriebseinrichtung 13 ist als elektrischer Antrieb ausgebildet. Der elektrische Antrieb 13 ist in nicht näher dargestellter Weise mit einem Regler verbunden. Der Regler empfängt Signale des Bauwerks, beispielsweise Schwingungssignale oder dergleichen. Aufgrund dieser Signale kann der Regler die Antriebseinrichtung 13 so ansteuern, dass die Tilgermasse 5 eine der Schwingung des Bauwerks entgegenwirkende Bewegung ausführt. Die Schwingungstilgeranordnung 1 erhält dadurch eine aktive Komponente, so dass es sich um eine aktive Schwingungstilgeranordnung 1 handelt.

Die Schwingungstilgeranordnung 1 weist darüber hinaus einen Wirbelstromdämpfer auf. Ein Wirbelstromdämpfer weist zwei Elemente auf, von denen eines als Magnetfelderzeugungseinrichtung und eines als elektrischer Leiter ausgebildet ist. Die Magnetfelderzeugungseinrichtung kann beispielweise einen oder mehrere Permanentmagnete aufweisen. Der elektrische Leiter kann durch eine Platte aus elektrisch leitendem Material gebildet sein, beispielsweise aus Aluminium oder Kupfer oder einer Legierung. Wenn die Magnetfelderzeugungseinrichtung gegenüber dem elektrischen Leiter bewegt wird, dann werden in dem elektrischen Leiter Wirbelströme induziert. Diese Wirbelströme erzeugen Wärme. Die zum Induzieren der Wirbelströme notwendige Energie wird der Bewegung der Tilgermasse 5 entzogen. Dadurch ergibt sich eine gewisse Dämpfung.

Da diese Dämpfung ohne die Zufuhr von Energie von außen auskommt, kann der Wirbelstromdämpfer auch dann wirken, wenn die Antriebseinrichtung 13 nicht arbeiten kann.

Eine erste Möglichkeit der Ausbildung des Wirbelstromdämpfers besteht darin, den elektrischen Leiter am Rad 12 oder einer anderen sich drehenden Position der Rollenanordnung 11 anzuordnen und die Magnetfelderzeugungseinrichtung in der Tilgermasse benachbart zum Rad 12 anzuordnen. Wenn sich das Rad 12 bei einer Pendelbewegung der Tilgermasse 5 dreht, dann werden in dem sich gemeinsam mit dem Rad drehenden elektrischen Leiter die oben genannten Wirbelströme erzeugt.

Eine andere Möglichkeit besteht darin, die Platte 7 elektrisch leitend auszuführen und einen Permanentmagneten 14 an der Tilgermasse anzuordnen. Bei dieser Anordnung werden in der Platte 7 Wirbelströme erzeugt, wenn sich die Tilgermasse 5 über die Platte 7 hinwegbewegt.

Die Platte 7 ist eben. Dementsprechend ist auch die Fläche 6 als ebene Fläche ausgebildet. Durch die Abstützung der Tilgermasse 5 über die Rollenanordnung 11 entstehen also keine zusätzlichen Rückstellkräfte, die über die reinen Rückstellkräfte eines Pendels hinausgehen.

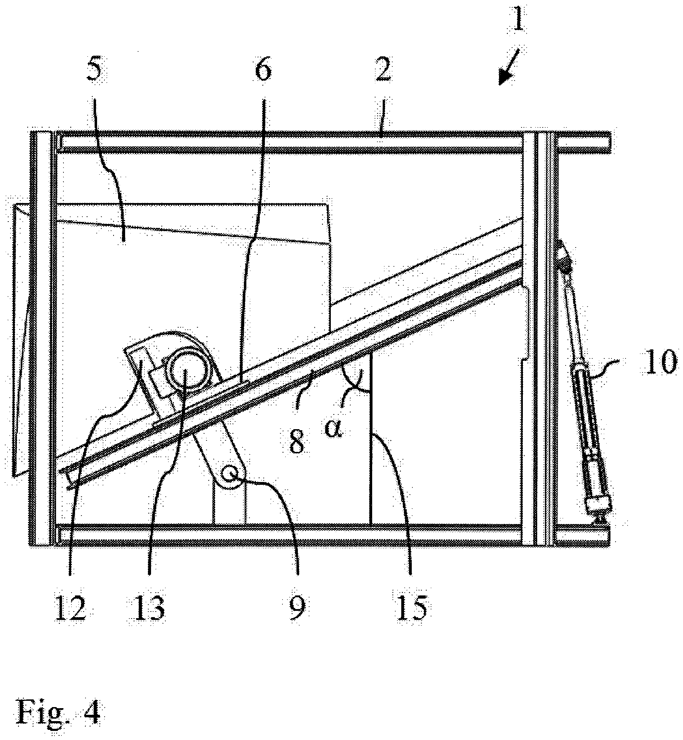

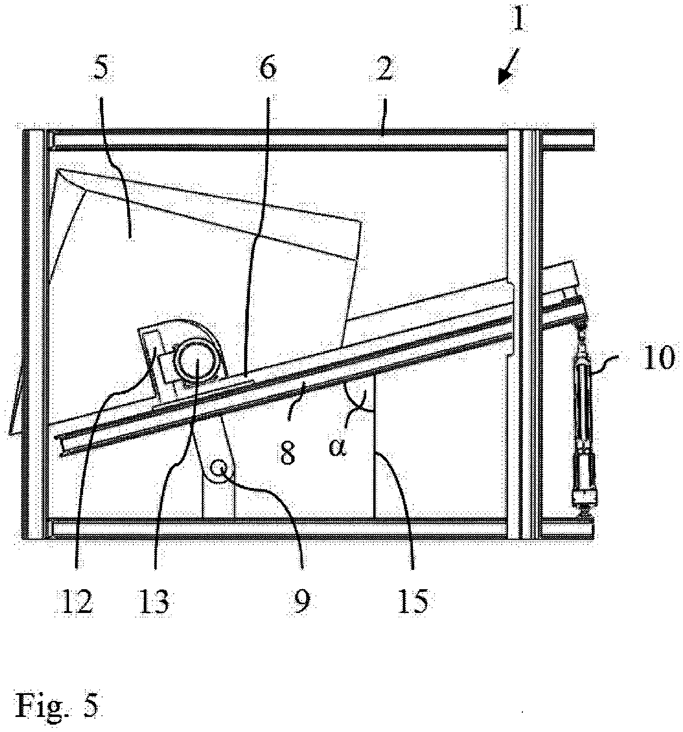

Die Fig. 4 und 5 zeigen die Schwingungstilgeranordnung 1 mit Einstellungen für unterschiedliche Pendelfrequenzen. Durch eine Linie 15 ist die Schwerkraftrichtung dargestellt.

Die Stelleinrichtung 10 kann nun einen Winkel $\alpha$ zwischen der Schwerkraftrichtung 15 und dem Gestell 8 verändern. Da die Fläche 6 parallel zum Gestell 8 verläuft, ergibt sich dadurch automatisch auch eine Veränderung des Winkels $\alpha$ zwischen der Schwerkraftrichtung 15 und der Fläche 6.

Die Eigenfrequenz der Schwingungstilgeranordnung 1 lässt sich (linearisiert) wie folgt ausdrücken:

$$ f = \frac{1}{2\pi} \sqrt{\frac{g * \cos\alpha}{l}} $$

wobei

f:     Eigenfrequenz
g:     Erdbeschleunigung
l:     Pendellänge
$\alpha$:     Neigungswinkel zwischen der Schwerkraftrichtung 15 und der Fläche 6 ist.

Damit lässt sich erkennen, dass bei der Ausgestaltung nach Fig. 4, bei der die Fläche 6 "steiler" angeordnet ist, eine höhere Pendelfrequenz ergibt, als bei der Ausgestaltung nach Fig. 5, in der die Fläche 6 weniger steil ist. Dies ergibt sich daraus, dass der Massenanteil der Tilgermasse 5 nur mit dem Cosinus des Neigungswinkels $\alpha$ in die Pendelfrequenz eingeht.

Die Montage der Schwingungstilgeranordnung 1 kann bei einer Windenergieanlage in der Gondel oder unterhalb der Gondel und zwar hier sowohl außerhalb des Turms als auch innerhalb des Turms erfolgen. Bei Montage am Turm wird eine Nachführeinrichtung vorgesehen, damit die Wirkrichtung der Schwingungstilgeranordnung immer quer zur Windrichtung orientiert ist. Alternativ kann bei Montage im Turm der Windenergieanlage auch eine mechanische Kopplung der Schwingungstilgeranordnung an die Gondel erfolgen.

**Patentansprüche**

1. Schwingungstilgeranordnung (1) zur Verminderung von Schwingungen, insbesondere für hohe schlanke Bauwerke, mit einem Pendel (3), das am Bauwerk aufhängbar ist, und einer am Pendel (3) angeordneten Tilgermasse (5), die an einer relativ zur Schwerkraftrichtung geneigten Fläche (6) abgestützt ist, wobei das Pendel (3) über eine Rollenanordnung (11) an der Fläche (6) abgestützt ist, **dadurch gekennzeichnet, dass** die Rollenanordnung (11) mit einer steuerbaren Antriebseinrichtungen (13) verbunden ist.

2. Schwingungstilgeranordnung nach Anspruch 1, **dadurch gekennzeichnet, dass** die Rollenanordnung (11) an der Tilgermasse (5) angeordnet ist.

3. Schwingungstilgeranordnung nach Anspruch 2, **dadurch gekennzeichnet, dass** die Rollenanordnung (11) in Schwerkraftrichtung in einem Bereich unterhalb des Massenschwerpunkts der Tilgermasse (5) angeordnet ist.

4. Schwingungstilgeranordnung nach Anspruch 2 oder 3, **dadurch gekennzeichnet, dass** die Rollenanordnung (11) mindestens ein Rad (12) aufweist, dessen Rotationsachse parallel zu einer senkrecht zu der Fläche (6) gerichteten Ebene ist, in der das Pendel (3) angeordnet ist.

5. Schwingungstilgeranordnung nach Anspruch 4, **dadurch gekennzeichnet, dass** die Rotationsachse parallel zur Fläche (6) gerichtet ist.

6. Schwingungstilgeranordnung nach einem der Ansprüche 1 bis 5, **dadurch gekennzeichnet, dass** die Fläche (6) mit einer Stelleinrichtung (10) verbunden ist, durch die ein Neigungswinkel (α) der Fläche gegenüber der Schwerkraftrichtung (15) veränderbar ist.

7. Schwingungstilgeranordnung nach Anspruch 6, **dadurch gekennzeichnet, dass** die Fläche (6) um einen Drehpunkt (9) verschwenkbar ist, der in Schwerkraftrichtung unterhalb des Massenschwerpunkts der Tilgermasse (5) angeordnet ist.

8. Schwingungstilgeranordnung nach einem der Ansprüche 1 bis 7, **dadurch gekennzeichnet, dass** die Rollenanordnung (11) mit einer regelbaren Antriebseinrichtung (13) verbunden ist.

9. Schwingungstilgeranordnung nach Anspruch 8, **dadurch gekennzeichnet, dass** die Antriebseinrichtung (13) als elektrischer Antrieb ausgebildet ist, der sowohl motorisch als auch generatorisch betreibbar ist.

10. Schwingungstilgeranordnung nach einem der Ansprüche 1 bis 9, **dadurch gekennzeichnet, dass** sie einen Dämpfer, insbesondere einen Wirbelstromdämpfer aufweist.

11. Schwingungstilgeranordnung nach Anspruch 10, **dadurch gekennzeichnet, dass** der Wirbelstromdämpfer zwei Elemente aufweist, von denen eines als Magnetfelderzeugungseinrichtung (14) und eines als elektrischer Leiter ausgebildet ist, und die beiden Elemente durch eine Bewegung des Pendels relativ zueinander bewegbar sind.

12. Schwingungstilgeranordnung nach Anspruch 11, **dadurch gekennzeichnet, dass** der Wirbelstromdämpfer zumindest einen Teil der Rollenanordung (11) umfasst.

13. Schwingungstilgeranordnung nach Anspruch 12, **dadurch gekennzeichnet, dass** eines der beiden Elemente durch die Rollenanordnung (11) gegenüber dem anderen der beiden Elemente drehantreibbar ist.

14. Schwingungstilgeranordnung nach Anspruch 11, **dadurch gekennzeichnet, dass** eines der beiden Elemente an der Tilgermasse (5) oder am Pendel (3) und das andere der beiden Elemente an der Fläche (6) angeordnet ist.

15. Schwingungstilgeranordnung nach einem der Ansprüche 1 bis 14, **dadurch gekennzeichnet, dass** die Fläche (6) als ebene Fläche ausgebildet ist.

## Claims

1. A vibration absorber assembly (1) for reducing oscillations, in particular for tall, slender buildings, with a pendulum (3), which can be suspended from the building, and an absorber mass (5) arranged on the pendulum (3), said mass being supported on a surface (6) set at an angle relative to the direction of gravity, wherein the pendulum (3) is supported on the surface (6) via a roller assembly (11), **characterized in that** the roller assembly (11) is connected to a controllable drive device (13).

2. The vibration absorber assembly according to Claim 1, **characterized in that** the roller assembly (11) is arranged on the absorber mass (5).

3. The vibration absorber assembly according to Claim 2, **characterized in that** the roller assembly (11) is arranged in an area below the centre of gravity of the absorber mass (5) as seen in the direction of gravity.

4. The vibration absorber assembly according to Claim 2 or 3, **characterized in that** the roller assembly (11) includes at least one wheel (12), whose rotational axis runs parallel to a plane, in which the pendulum (3) is arranged and which is oriented perpendicular to the surface (6).

5. The vibration absorber assembly according to Claim 4, **characterized in that** the rotational axis is oriented parallel to the surface (6).

6. The vibration absorber assembly according to any one of Claims 1 to 5, **characterized in that** the surface (6) is connected to an adjuster device (10), which can be used to modify an angle of inclination (α) of the surface against the direction of gravity (15).

7. The vibration absorber assembly according to Claim 6, **characterized in that** the surface (6) can be swivelled around a pivot (9), which is arranged below the centre of gravity of the absorber mass (5) as seen in the direction of gravity.

8. The vibration absorber assembly according to any one of Claims 1 to 7, **characterized in that** the roller assembly (11) is connected to a controllable drive device (13).

9. The vibration absorber assembly according to Claim 8, **characterized in that** the drive device (13) is designed as an electric drive, which can be operated both as a motor and a generator.

10. The vibration absorber assembly according to any one of Claims 1 to 9, **characterized in that** it includes a damper, in particular an eddy current damper.

11. The vibration absorber assembly according to Claim 10, **characterized in that** the eddy current damper includes two elements, one of which is designed as a magnetic field generator device (14) and the other as an electric conductor, and **in that** both elements are moveable relative to each other by a movement of the pendulum.

12. The vibration absorber assembly according to Claim 11, **characterized in that** the eddy current damper comprises at least a portion of the roller assembly (11).

13. The vibration absorber assembly according to Claim 12, **characterized in that** one of the two elements can be rotationally driven against the respective other element by the roller assembly (11).

14. The vibration absorber assembly according to Claim 11, **characterized in that** one of the two elements is arranged on the absorber mass (5) or on the pendulum (3) and that the respective other of the two elements is arranged on the surface (6).

15. The vibration absorber assembly according to any one of Claims 1 to 14, **characterized in that** the surface (6) is designed as a flat surface.

**Revendications**

1. Agencement amortisseur de vibrations (1), destiné à réduire des vibrations, notamment pour des bâtiments hauts et élancés, pourvu d'un pendule (3) qui est susceptible de s'accrocher sur le bâtiment et d'une masse amortisseuse (5) qui est placée sur le pendule (3), qui est appuyée sur une surface (6) inclinée par rapport à la direction de la gravité, le pendule (3) étant appuyé par l'intermédiaire d'un agencement de galets (11) sur la surface (6), **caractérisé en ce que** l'agencement de galets (11) est relié avec un système d'entraînement (13) apte à être commandé.

2. Agencement amortisseur de vibrations selon la revendication 1, **caractérisé en ce que** l'agencement de galets (11) est placé sur la masse amortisseuse (5).

3. Agencement amortisseur de vibrations selon la revendication 2, **caractérisé en ce que** dans la direction de la gravité, l'agencement de galets (11) est placé dans une zone située en-dessous du centre de gravité de la masse amortisseuse (5).

4. Agencement amortisseur de vibrations selon la revendication 2 ou 3, **caractérisé en ce que** l'agencement de galets (11) comporte au moins une roue (12) dont l'axe de rotation est parallèle à un plan orienté à la perpendiculaire de la surface (6), dans lequel est placé le pendule (3).

5. Agencement amortisseur de vibrations selon la revendication 4, **caractérisé en ce que** l'axe de rotation est orienté à la parallèle de la surface (6).

6. Agencement amortisseur de vibrations selon l'une quelconque des revendications 1 à 5, **caractérisé en ce que** la surface (6) est reliée avec un système de réglage (10) qui permet de faire varier un angle d'inclinaison ($\alpha$) de la surface par rapport à la direction de la gravité (15).

7. Agencement amortisseur de vibrations selon la revendication 6, **caractérisé en ce que** la surface (6) est susceptible de pivoter autour d'un point de rotation (9), qui dans la direction de la gravité est placé en-dessous du centre de gravité de la masse amortisseuse (5).

8. Agencement amortisseur de vibrations selon l'une quelconque des revendications 1 à 7, **caractérisé en ce que** l'agencement de galets (11) est relié avec un système d'entraînement (13) réglable.

9. Agencement amortisseur de vibrations selon la revendication 8, **caractérisé en ce que** le système d'entraînement (13) est conçu sous la forme d'un entraînement électrique, susceptible de fonctionner à l'aide d'un moteur ou d'un générateur.

10. Agencement amortisseur de vibrations selon l'une quelconque des revendications 1 à 9, **caractérisé en ce qu'**il comporte un amortisseur, notamment un amortisseur à courant de Foucault.

11. Agencement amortisseur de vibrations selon la revendication 10, **caractérisé en ce que** l'amortisseur à courant de Foucault comporte deux éléments dont l'un est conçu sous la forme d'un système générateur de champs magnétiques (14) et l'un est conçu sous la forme d'un conducteur électrique et **en ce que** les deux éléments sont mobiles l'un par rapport à l'autre par un déplacement du pendule.

12. Agencement amortisseur de vibrations selon la revendication 11, **caractérisé en ce que** l'amortisseur à courant de Foucault comprend au moins une partie de l'agencement de galets (11).

13. Agencement amortisseur de vibrations selon la revendication 12, **caractérisé en ce que** l'un des deux éléments est susceptible d'être entraîné en rotation par l'agencement de galets (11) par rapport à l'autre des deux éléments.

**14.** Agencement amortisseur de vibrations selon la revendication 11, **caractérisé en ce que** l'un des deux éléments est placé sur la masse amortisseuse (5) ou sur le pendule (3) et l'autre des deux éléments est placé sur la surface (6).

**15.** Agencement amortisseur selon l'une quelconque des revendications 1 à 14, **caractérisé en ce que** la surface (6) est conçue sous la forme d'une surface plane.

EP 2 730 799 B1

Fig. 1

Fig. 2

EP 2 730 799 B1

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7324518 A

- WO 2009068599 A2